## Europäisches Patentamt
## European Patent Office
## Office européen des brevets

(19)

(11) Veröffentlichungsnummer: **0 139 161**
**B1**

(12) # EUROPÄISCHE PATENTSCHRIFT

(45) Veröffentlichungstag der Patentschrift:
25.10.89

(51) Int. Cl.⁴: **G 11 B 23/03**

(21) Anmeldenummer: **84110007.6**

(22) Anmeldetag: **22.08.84**

(54) **Aufbewahrungsbehälter für plattenförmige Aufzeichnungsträger.**

(30) Priorität: **29.08.83 EP 83108478**
**29.08.83 EP 83108481**
**02.08.84 DE 8423026 U**

(43) Veröffentlichungstag der Anmeldung:
**02.05.85 Patentblatt 85/18**

(45) Bekanntmachung des Hinweises auf die Patenterteilung:
**25.10.89 Patentblatt 89/43**

(84) Benannte Vertragsstaaten:
**DE FR GB IT SE**

(56) Entgegenhaltungen:
**DE-A-2 307 410**
**DE-C-1 131 026**
**FR-A-685 404**
**FR-A-1 113 766**
**GB-A-794 216**
**US-A-1 850 790**

(73) Patentinhaber: **idn inventions and development of novelties ag, Hartbertstrasse 9, CH- 7002 Chur (CH)**

(72) Erfinder: **Ackeret, Peter, Allmendstrasse 18, CH-8700 Küsnacht (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf 1 (DE)**

LIBER, STOCKHOLM 1989

## Beschreibung

Die Erfindung betrifft einen Aufbewahrungsbehälter für plattenförmige Aufzeichnungsträger, insbesondere Compactdiscs.

Ein Behälter, der die im Oberbegriff des Patentanspruchs 1 genannten Merkmale aufweist, ist in der DE-C-1 131 026 beschrieben und dargestellt. Der bekannte Behälter ist eigentlich ein Möbelstück zum Aufbewahren der üblichen Langspielplatten, die ihrerseits jeweils in Schutzhüllen eingelegt sind. Das schrankartige Möbelstück weist hinter einer Klapptür plattenartige Halter in horizontaler Lage auf, auf denen jeweils eine Platte in ihrer Hülle abgelegt werden kann. Auf einer Leiste seitlich neben den Haltern sind Wählknöpfe angebracht, und bei Betätigen eines Knopfes wird der zugehörige Halter von einer Federanordnung aus dem Gehäuse des Schrankes herausbefördert.

Seit der Veröffentlichung der genannten Druckschrift hat sich die Aufzeichnungs- und Wiedergabetechnik für Schall- und Bildsignale erheblich weiterentwickelt, wobei insbesondere relativ kleine laserabtastbare Schall- und Bildplatten, sogenannte "Compactdiscs", zu nennen sind, die im Gegensatz zu den älteren Schallplatten ziemlich unempfindlich gegen Fingerberührung sind.

Es gibt auch bereits Abspielgeräte für Compactdiscs, die für den Einbau in Kraftfahrzeuge bestimmt und geeignet sind und bei denen die Compactdisc nicht manuell auf einen Plattenteller aufgelegt zu werden braucht, sondern einfach durch einen frontseitigen Schlitz eingeschoben werden kann.

Ein Aufbewahrungsbehälter insbesondere für Compactdiscs, der zur Verwendung in Kraftfahrzeugen geeignet ist, muß bestimmten Bedingungen genügen. Er soll vom Fahrer mit einer Hand bedienbar sein, die Handhabung der Disc ohne Griffwechsel ermöglichen, den Fahrer nicht in seiner Aufmerksamkeit ablenken und schließlich als preisgünstiges Massenerzeugnis herstellbar sein. Da ferner die Einbaulage des Behälters im Kraftfahrzeug je nach dessen Bauart unterschiedlich sein wird, soll er in jeder dieser Einbaulagen funktionsfähig sein.

Der in der oben genannten Druckschrift beschriebene Aufbewahrungsbehälter ließe sich zwar entsprechend verkleinern, doch würde er die oben angegebenen Bedingungen nicht erfüllen:

Die Bedienbarkeit ist schlecht, weil zunächst die Klapptür zu öffnen ist, wonach erst eine Platte nebst Schutzhülle entnommen werden kann. Sie ist dann aus der Hülle herauszuholen und kann dann erst in das Abspielgerät eingelegt werden; diese Handhabung scheidet im Kraftfahrzeug von vornherein aus.

Würde man die Compactdiscs ohne Hülle auf den Haltern ablegen, wäre zwar die Handhabung leichter, aber die Discs könnten durch den abrasiven Kontakt mit den Haltern beschädigt werden.

Die bei dem bekannten Behälter vorgesehene Gebrauchslage ist so, daß die plattenförmigen Halter waagerecht liegen. Die Federvorspannung müßte aber, um auch eine senkrechte Einbaulage zuzulassen, so bemessen sein, daß neben den Reibungskräften auch die Schwerkraft überwunden wird. Wird dann ein so dimensionierter Behälter doch waagerecht eingebaut, ist die Federvorspannung relativ zu groß. Die auf dem Halter liegende Disc bliebe im Gehäuse zurück, wenn der Halter herausschnellt, oder aber wird in das Fahrzeug hineinkatapultiert. Aber selbst wenn für jede Einbaulage die "richtige" Federanordnung vorgesehen würde, wäre es für den Fahrer immer noch beschwerlich, die Disc von dem glatten, ebenen Halter zu lösen.

Ausgehend von einem Aufbewahrungsbehälter mit den im Oberbegriff des Patentanspruchs 1 genannten Merkmalen liegt der Erfindung die Aufgabe zugrunde, eine für die Benutzung im Kraftfahrzeug brauchbare Bauart zu schaffen, bei der die oben geschilderten Nachteile vermieden sind.

Die gemäß der Erfindung zur Lösung dieser Aufgabe vorgesehenen Mittel sind jeweils in den Patentansprüchen 1 und 2 definiert.

Zunächst ist wesentlich, daß die Disc derart auf dem plattenförmigen Halter abgestützt wird, daß sie sicher aus dem Gehäuse heraustransportiert wird, aber auch nicht herauskatapultiert werden kann.

Diese Abstützung ist jedoch so auszubilden, daß die Disc in ihrem Aufzeichnungsbereich nicht in abrasiven Kontakt mit dem Halter gelangen kann, weder während der Aufbewahrung (wegen der ständigen Erschütterungen beim Fahren) noch während des Entnehmens oder Einlegens. Ein Teil der Abstützung kann z. B. von einer mit dem Halter verbundenen Frontwand gebildet sein, die jedoch das Einlegen oder Entnehmen der Disc auch nicht behindern darf, wobei die Disc vorzugsweise derart präsentiert wird, daß der Benutzer sie an einander gegenüberliegenden Stellen ihrer Breitseiten erfassen kann, da er sie auch in dieser Haltung in den Schlitz des Wiedergabegeräts einschieben wird.

Ausführungsbeispiele von Aufbewahrungsbehältern gemäß der Erfindung sind in den beigefügten Zeichnungen dargestellt und werden nachstehend unter Bezugnahme auf diese im einzelnen erläutert.

Fig. 1 zeigt in Draufsicht bei geschnittenem Gehäuse einen Halter mit einer auf ihm liegenden Compactdisc,

Fig. 2 stellt einen Ausschnitt einer abgewandelten Ausführungsform des Halters nach Fig. 1 dar,

Fig. 3 zeigt im Vertikalschnitt durch das Gehäuse zwölf unterschiedliche Ausführungsformen von Haltern, die nur zur Vereinfachung in einem gemeinsamen Doppelgehäuse aufgenommen gezeichnet wurden,

Fig. 4 ist ein Teilvertikalschnitt gemäß Fig. 3,

Fig. 5 zeigt perspektivisch ein weiteres Ausführungsbeispiel,

Fig. 6 dient der Erläuterung bestimmter Bemessungsvorschriften,

Fig. 7 zeigt eine Variante der Fig. 5 in Frontansicht,

Fig. 8 stellt perspektivisch eine weitere Ausführungsform dar,

Fig. 9 zeigt perspektivisch eine weitere Ausführungsform,

Fig. 10 ist ein Horizontalschnitt durch einen der Dischalter in Fig. 9,

Fig. 11 zeigt in Teilfrontansicht das Profil zweier übereinander angeordneter Halter,

Fig. 12 stellt eine Variante der Ausführungsform nach Fig. 9 dar,

Fig. 13 und 14 zeigen jeweils perspektivisch weitere Ausführungsformen,

Fig. 15 ist ein weitgehend vereinfachter Vertikalschnitt durch eine weitere Ausführungsform, und

Fig. 16 stellt perspektivisch eine alternative Ausführungsform dar.

Sämtliche dargestellten Ausführungs-Beispiele beziehen sich auf einen Behälter für Compactdiscs. Die Ausschubfederanordnung und das Verriegelungssystem werden nur einmal erläutert; sie sind bei den anderen Ausführungs-Beispielen identisch anwendbar, soweit dort nichts anderes gesagt ist.

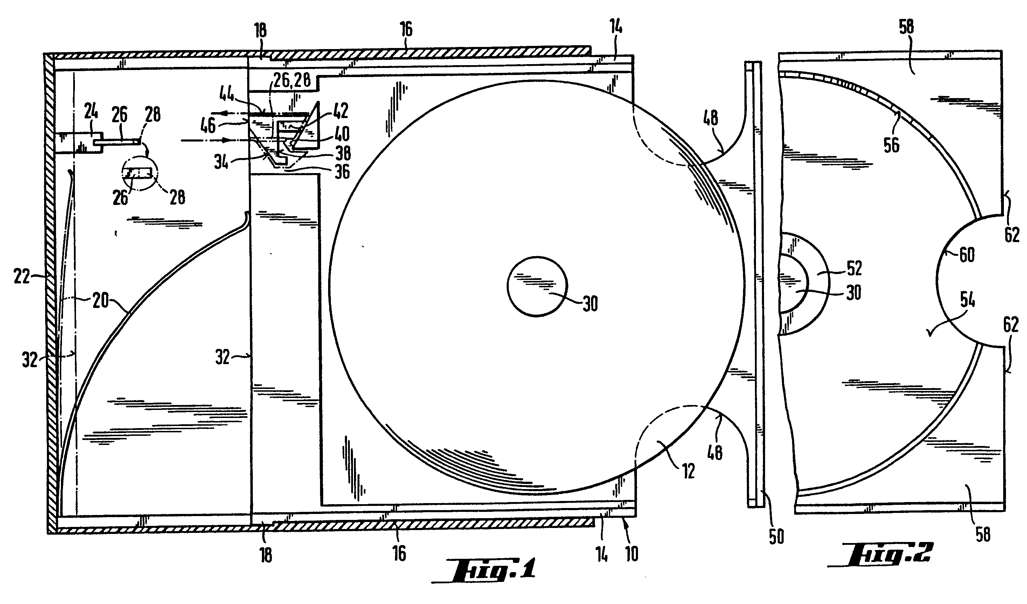

Der Halter 10 ist mittels seiner Kanten 14 in Führungen der Gehäuseseitenwände 16 gleitbeweglich aufgenommen. Seine innere Endstellung und sein Ausschubhub werden durch Anschläge 18 bzw. durch die Verriegelung festgelegt. An der Gehäuserückwand ist eine Blattfeder 20 mit einem Ende befestigt, während ihr freies Ende in die, in Figur 1 mit ausgezogenen Linien dargestellte Position vorgespannt ist. Die Position des Halters 10 und der die Vorspannkraft auf ihn ausübenden Feder 20 sind gestrichelt angedeutet.

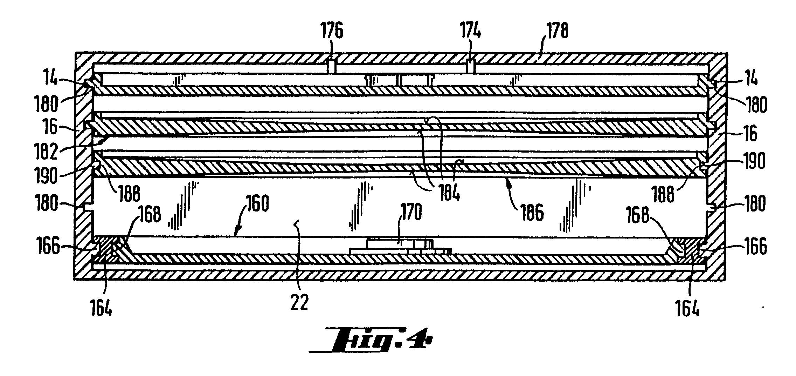

An der Rückwand 22 des Gehäuses ist ferner eine erste Kunststoffeder 24 angeformt, die aus der Ebene parallel zur Hauptebene des Halters 10 nach oben auslenkbar ist. Das freie Ende dieser Feder trägt eine zweite, quer zu ihr auslenkbare Blattfeder 26, an deren freies Ende ein Haken 28 angeformt ist. (Dieser Haken ist in Figur 3 deutlich erkennbar.)

Der Plattenhalter 10 trägt eine Compactdisc 12, die auf einer an ihn angeformten Nabe mit ihrem Zentralloch aufgeschnappt ist. Die Nabe ragt von der Oberfläche des Halters 10 nach oben und ist mit 30 bezeichnet.

Von der Innenkante 32 des Halters, auf die die Feder 20 einwirkt, erstrecken sich eingetiefte Führungskanäle, längs denen der Haken 28 mittels einer Steuerkulisse unter Auslenkung der Federn 26 und 24 geführt wird, wenn der Halter in das Gehäuse eingeschoben und dort verriegelt wird sowie durch erneuten Druck auf die Frontkante des Halters wieder für den Ausschub entriegelt wird.

Es sei angenommen, dass der Halter die in Figur 1 dargestellte Ausschubposition einnimmt und jetzt gegen die Kraft der Feder 20 längs der Führungen 14 in das Gehäuse gedrückt wird. Dann stösst der Haken 28 auf eine erste Steuerfläche 34 der Kulisse und wird dabei längs einer Bahn geführt, die strichpunktiert angedeutet ist, wobei die Feder 26 deformiert wird. Am Ende der Steuerfläche 34 gleitet der Haken durch den Kanal 36 und kann infolge der Vorspannung der Feder 26 wieder zurückspringen, so dass er sich an der Rastkante 38 einhängt. Damit ist der Halter verriegelt. Drückt man nun erneut den Halter gegen die Feder 20 gleitet der Haken 28 längs einer zweiten Steuerfläche 40 und wird dabei unter zusätzlicher Auslenkung der Feder 24 über eine Rampe 42 gehoben, hinter der er unter Entspannung der Feder 24 herunterspringt. Wenn man jetzt den Halter loslässt, kann ihn die Feder 20 aus dem Gehäuse herausschieben, wobei der Haken 28 längs der Kante 44 der Kulisse gleitet. Nach Passieren von deren Endkante 46 bringt ihn die sich entspannende Feder 26 wieder in die Vorbereitungsposition zurück.

Nahe dem frontseitigen Ende weist der Halter seitliche Ausschnitte 48 auf, in die die Disc 12 teilweise hineinragt, so dass sie erfasst und manuell über die starr an den Halter 10 angeformte Frontplatte 50 gehoben werden kann.

Man erkennt, dass die Nabe 30 ein Stützbauteil bildet, das sowohl die Disc während des Ausschubs mit dem Halter koppelt als auch verhindert, dass sie nach vorn herauskatapultiert wird.

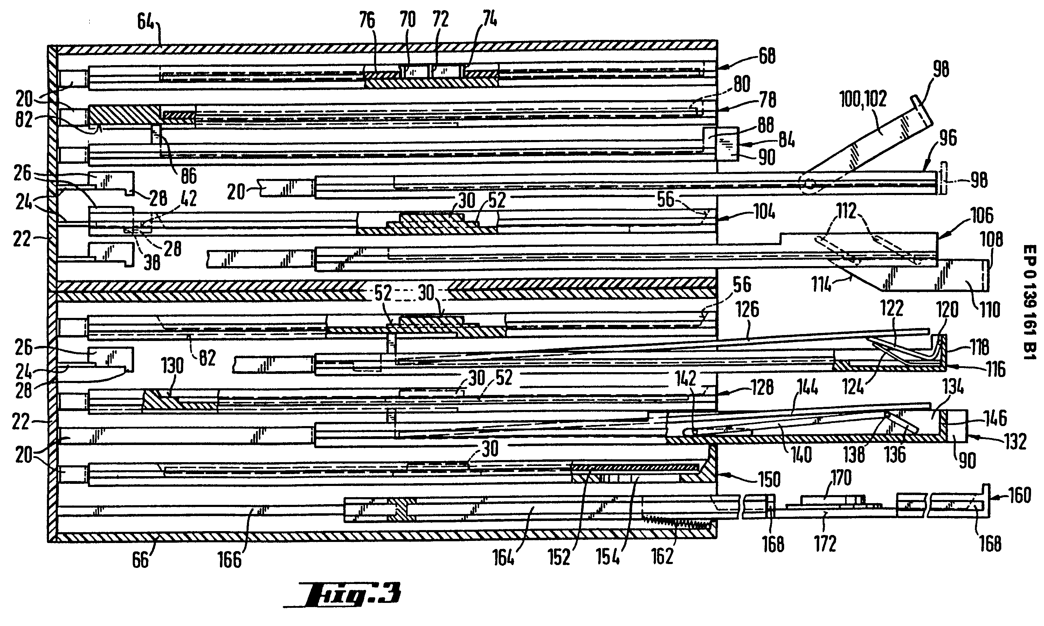

In Figur 2 erkennt man wieder die Nabe 30, unter der sich ein Stützring 52 koaxial anschliesst. Auf im liegt der spurfreie Innenrand der Disc, während die Aufzeichnungsspuren im Abstand von der weiter eingetieften Hauptfläche 54 des Discaufnahmebereichs liegen. Eine kegelstumpfförmige Anschlussfläche 56 verbindet den Bereich 54 mit dem dickeren Führungsabschnitt 58 des Halters.

Abweichend von Figur 1 weist der Halter hier keine Frontwand auf, und der Griffausschnitt 60 erstreckt sich von der Aussenkante 62 des Halters nach innen.

Damit die Gehäusewandungen einerseits, die an die Rückwand 22 andererseits angeformten Federn 24 und 26 mit Haken 28 entformt werden können (beides sind Kunststoffspritzteile), ist die Rückwand 22 getrennt gefertigt und an die Seitenwände 16, die ihrerseits mit einer Deckwandung 64 (Figur 3) und einer Bodenwandung 66 zusammengespritzt sind, angeklebt oder mittels Ultraschall angeschweisst.

Die unterschiedlichen Ausführungsformen der Halter, die in Figur 3 dargestellt sind, werden nun nacheinander jeweils hinsichtlich ihrer charakteristischen Merkmale erläutert.

Der oberste Halter 68 ist mit einer in das Discloch einschnappenden Nabe 70 versehen, deren Schlitze 72 das Einfedern der einzelnen Nabensektoren ermöglichen, während Aussenrandteile 74 wulstartig über das Discloch greifen. Die Disc 76 ist schematisch angedeutet.

Bei dem zweiten Halter 78 liegt die Disc 80 einfach in einer eingetieften Mulde. An seiner Unterseite weist der Halten 78 Rillen 82 auf, in die von unten, nämlich von dem nächsten Halter 84 Zinken 86 greifen. Die Rillen 82 können länger sein, als dem Hub des Halters entspricht. Für den Halter 84 übernehmen die Zinken 86 die Mitnehmerfunktion, und da sie mit den Rillen 82 wie zwei Kämme zusammenwirken, kann die Disc nicht zwischen zwei übereinanderliegenden Haltern durchrutschen. Die Rückhalterfunktion wird von der Frontwand 88 des Halters 84 übernommen, die eine Auslösetaste 90 trägt. Es ist bevorzugt, dass die Taste 90 sich um eine grössere Länge 92 (vergleiche Figur 6) über die Frontwand hinaus erstreckt, als der Auslösehub 94 für das Verriegelungssystem beträgt, damit nicht versehentlich mehrere Halter gleichzeitig ausgelöst werden, sondern nur derjenige auf dessen Taste ein Benutzer drückt.

Die insoweit beschriebenen Halter 68, 78 und 84 weisen alle Eingriffsöffnungen zum Herüberheben einer Disc über die starre Frontwand auf, wie sie in Figur 1 mit 48 und Figur 2 mit 60 bezeichnet sind.

Die Manipulation dabei ist jedoch etwas delikat. Es wäre weniger Handfertigkeit erforderlich, wenn man die Disc einfach nach vorn herausziehen könnte, die Frontwand also nicht im Wege wäre, oder aber die Disc automatisch soweit angehoben würde, dass man sie trotz einer starren Frontwand leicht herausziehen kann.

Konstruktive Lösungen hierfür sind bei dem nächsten Halter und weiteren vorgesehen.

Der Halter 96 weist eine Frontwand 98 auf, welche mittels seitlicher Wangen 100 bei 102 an den Halter angelenkt ist. Hier ist zu erwähnen, dass die Frontwand 98 trotzdem ihre Funktion als Rückhalterorgan ausüben kann, wenn sie sich erst hochstellt, sobald der Halter ausgefahren ist. Hierfür erforderliche Steuereinrichtungen sind nicht dargestellt; sie liegen im Fachwissen des Konstrukteurs.

Der nächste Halter 104 entspricht der Ausführungsform gemäss Figur 2. Hier ist jedoch noch einmal der Aufbau des Verriegelungssystems in Seitenansicht dargestellt, und insbesondere die Rampe 42 ist gut erkennbar.

Der nächste Halter 106 weist eine Frontwand 108 mit Wangen 110 auf, die bei ausgefahrenem Halter z. B. durch Schwerkraftwirkung längs Geradführungen 112 heruntergleiten kann, die seitlich des Discaufnahmebereichs am Halter vorgesehen sind. Auf diese Weise wird der Fluchtraum vor der Disc frei gemacht, und sie kann nach vorne herausgenommen werden. Beim Wiedereinschub drückt man auf die Frontwand 108, und wenn die Keilschräge 114 der Wangen auf die Frontkante des Gehäuses aufläuft, werden sie zusammen mit der Frontwand wieder gehoben.

Es versteht sich, dass bei allen beschriebenen und noch zu beschreibenden Haltern das Verriegelungssystem identisch wie in Figur 1 ausgebildet ist, und dies gilt auch für die noch zu erläuternden Halter. Es ist ferner anzumerken, dass die beiden in Figur 3 formschlüssig zusammengefügten, übereinander stehenden Gehäuse auch einstückig ausgebildet sein könnten.

Der nächst untere Halter, der oberste im unteren Gehäuse, entspricht der Ausführungsform der Figur 2 und weist die Rillen 82 wie beim Halter 78 auf, in die entsprechende Zinken vom darunterliegenden Halter eingreifen.

Der nächste Halter 116 besitzt eine starr an ihn angeformte Frontwand 118, ihn welcher um zu ihr parallele Zapfen 120 ein Hebeorgan in Form eines Winkels 122 angelenkt ist, dessen freier Arm von einer Hilfsfeder 124 in die Hebeposition gemäss Figur 3 vorgespannt ist. Der Hebearm greift unter die Disc 126 und hebt ihre äussere Kante über die Frontwand. Beim Einschieben wird der Winkel 122 nach unten gedrückt, weil die spurfreie Oberseite der Disc 126 mit der Gehäusefrontkante oder dem darüberliegenden Halter eine Keilführung bildet.

Der nächste Halter 128 ist im Profil gezeichnet. Zusätzlich zu der die Disc haltenden Anordnung aus Nabe 30 und Ring 52 gemäss Figur 2 ist die Disc auch noch an ihrem spurfreien Aussenrand von einer Felge 130 abgestützt.

Der nächste Halter 132 weist von der Frontwand nach hinten erstreckende Seitenplatten 134 auf, in denen Schlitze 136 eingebracht sind, welche sich schräg aufwärts nach hinten erstrecken. In diese Schlitze 136 greifen Zapfen 138 eines Hebebügels 140, an dessen den Zapfen 138 abgewandtem Ende Steuerstifte 142 vorgesehen sind, welche in Führungsschlitze der Gehäuseseitenwandung eingreifen. In jeder Endstellung des Halters stossen diese Stifte 142 an einem Ende dieser Schlitze an und die Schlitzlänge ist etwas kürzer bemessen als der Hub des Halters, so dass der Halter 140 zwischen einer Hebeposition, die in Figur 3 dargestellt ist und in der er die Disc 144 über die Gehäusefrontwand 146 hebt, und einer Absenkposition pendelt, in die er beim Auflaufen auf das innere Ende der Gehäusestütze spätestens gebracht wird.

Der nächste Halter 150 entspricht hinsichtlich der Funktion des Mitnehmerorgans und des Rückhalterorgans der Figur 2. Die Frontwand weist jedoch keine Unterbrechung auf, wie sie in Figur 2 durch den Ausschnitt 60 bedingt ist, sondern erstreckt sich über die gesamte Breite des Gehäuses und verschliesst damit dieses bei einem eingeschobenen Halter vollständig. Zur Entnahme der Disc 152 ist der Halter 150 mit einer Durchbrechung 154 versehen. Bei ausgefahrenem Halter kann der Benutzer mit dem Finger von unten durch die Durchbrechung greifen, die Disc von der Nabe 30 abheben und nach vorn herausziehen, da dann ihre äussere Kante oberhalb der Frontwand liegt.

Schliesslich besteht noch die Möglichkeit, einen Teleskopauszug für die Halter vorzusehen. Dies ist bei dem letzten Halter 160 angedeutet:

Längs der Gehäuseseitenwände sind um etwa die halbe Gehäusetiefe mittels Zugfedern 162 ausziehbare Schienen 164 (deren Profil ist schrafiert angegeben) gleitbeweglich geführt, in dem in den einen Schlitz des Schienenprofils eine an die Gehäuseseitenwand innen angeformte Rippe 166 greift, während in dem gegenüberliegenden Schlitz eine am Halter 160 angeformte Gegenrippe 168 greift. Auch der Halter 160 ist um etwa die halbe Gehäusetiefe relativ zu den Schienen 164 mittels der Zugfedern 162 verschieblich. Der Gesamthub des Halters 160 ist mithin so gross, dass man die Disc frei nach oben von ihren Stützbauteilen 170 abheben kann, was dadurch ermöglicht wird, dass der Halter seitliche Einschnitte 172 etwa beidseits des Zentrums der Disc aufweist, deren Form ähnlich der der Einschnitte 48 in Figur 1 ist, jedoch viel weniger tief.

In Figur 4 erkennt man, dass die Zinken 174 des jeweils im Gehäuse obersten Halters in zugeordnete Schlitze 176 der Gehäusedeckwand 178 greifen. Der hier ganz oben dargestellte Halter ist mit seitlichen Rillen 14 unmittelbar in Gehäuserillen 180 geführt. Der darunter dargestellte Halter 182 weist auf seiner Ober- und Unterseite ein konkaves oder wannenförmiges Profil 184 auf. Ganz gleich, wie ungeschickt man eine Disc in den Spalt zwischen zwei solcher Halter mit Wannenprofil einschiebt, die Disc kann immer nur mit ihrer unempfindlichen Aussenkante an irgendeinem Flächenbereich beider Halter in Berührung kommen. Auf diese Weise sind die Discs unbedingt gegen Zerkratzen geschützt.

Der darunter dargestellte, ebenfalls mit Wannenprofil versehene Disc-Halter 186 weist hier Führungsrillen 188 auf, die auf Führungsstege 190, angeformt an die Gehäuseseitenwände 16 aufgeschoben sind.

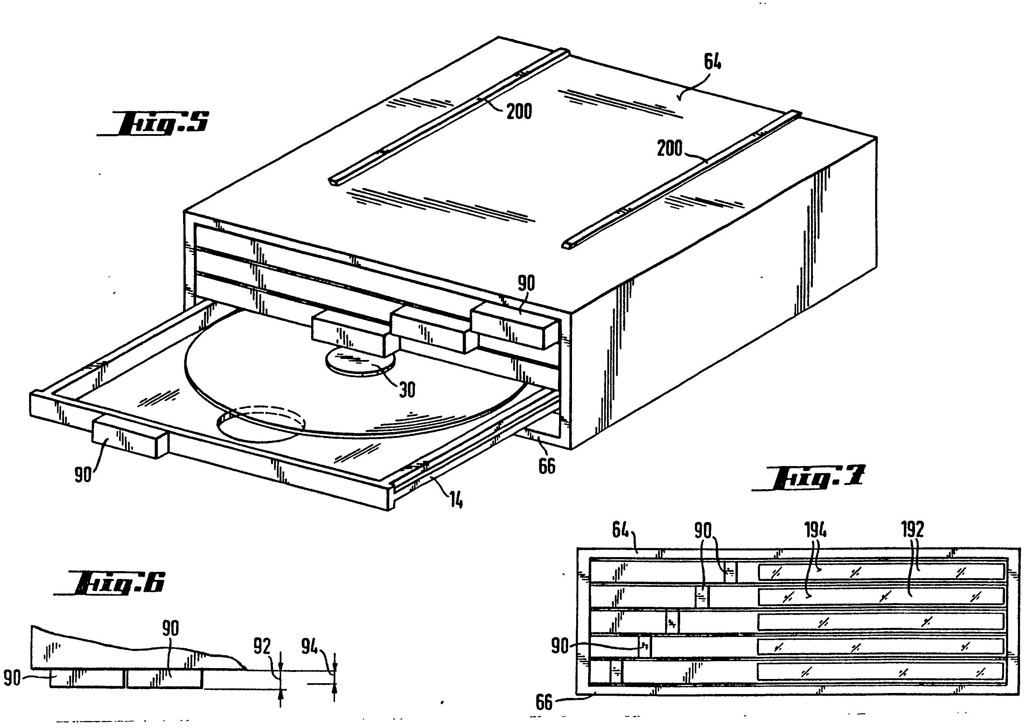

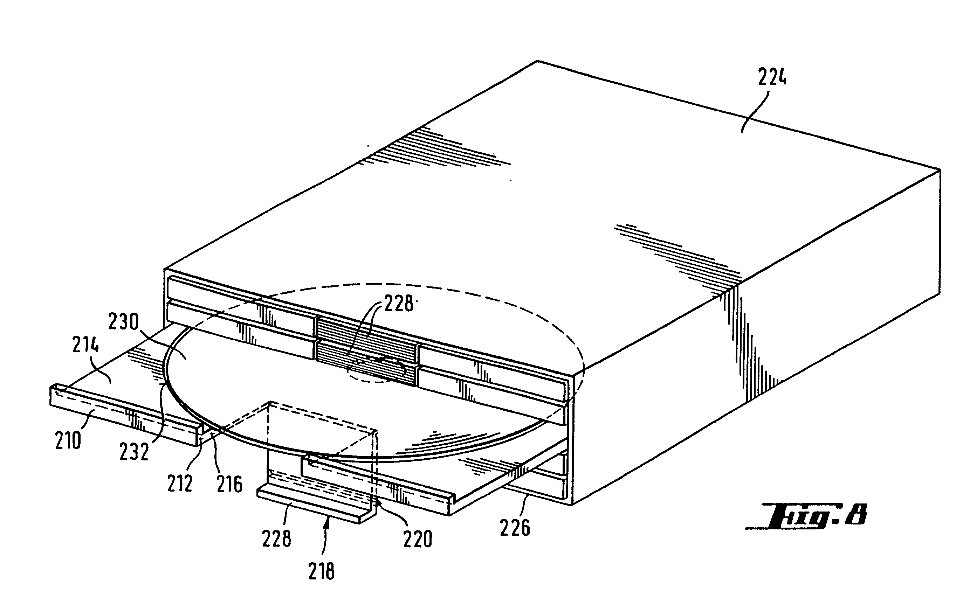

Es versteht sich selbstverständlich, dass man ein und dasselbe Gehäuse immer nur mit gleichartigen Haltern bestücken wird, allenfalls mit Ausnahme der Auslösetasten 90, worauf bei der nachstehenden Erläuterung der Figuren 5 und 7 eingegangen wird.

Die Darstellung ist ja weitgehend schematisch, und insbesondere sind die Höhenabmessungen der Halter übertrieben bezeichnet, damit die Einzelheiten in den Zeichnungsfiguren überhaupt erkennbar sind. In Wirklichkeit haben die einzelnen Halter voneinander nur Abstände in der Grössenordnung von 5 mm oder sogar weniger. Würde man deshalb die Auslösetaste 90 aller in einem Gehäuse untergebrachten Schieber an derselben Stelle ihrer Frontwand anordnen, könnte man kaum einen einzelnen Halter durch Fingerdruck allein auslösen.

Es ist deshalb bevorzugt, wie in Figuren 5 und 7 angedeutet, die Tasten 90 aufeinanderfolgender Halter seitlich zu staffeln und die Tasten mit einer Breite etwa entsprechend der Grösse einer Fingerkuppe auszubilden. Dies ist in Figur 5 dargestellt.

Es können aber auch sehr schmale Tasten, wie in Figur 7, vorgesehen sein, die nicht über die gesamte Gehäusebreite verteilt gestaffelt sind, so dass rechts von den Tasten in Figur 7 gleich grosse Beschriftungsfelder 192 frei bleiben, die gegebenenfalls durch einen Klarsichtdeckel 194 geschützt sind.

Nur in Figur 5 sind auf der Gehäusedeckwand 64 hinterschnittene Stege 200 gezeichnet, denen in der Gehäusebodenwandung 66 komplementäre Nuten zugeordnet sind. Mit Hilfe dieser Stege und Nuten können gleichartige Gehäuse formschlüssig miteinander verbunden und zu grösseren Magazinen gestapelt werden.

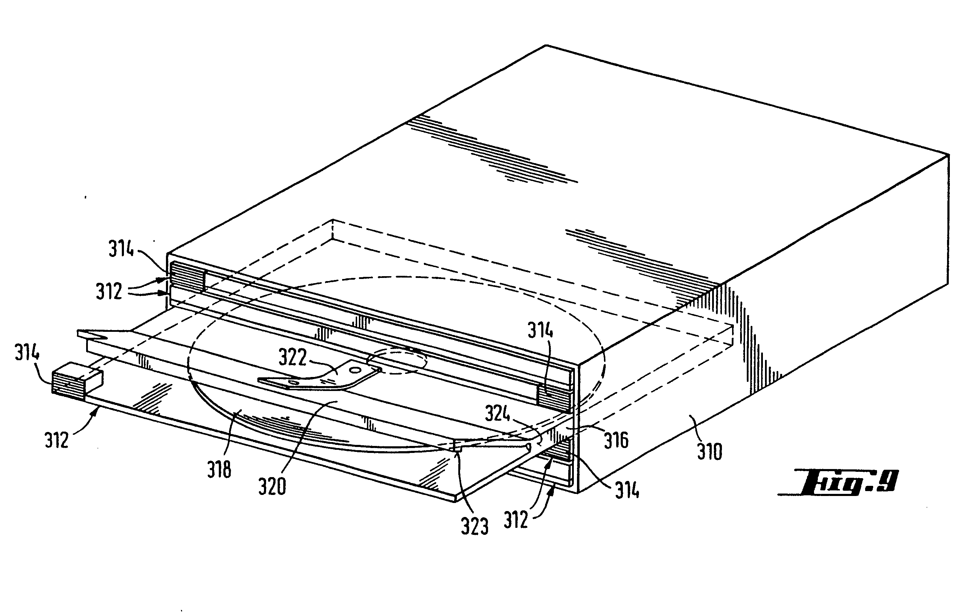

Fig. 8 zeigt eine Ausführungsform, bei der der plattenförmige Halter eine starr mit ihm verbundene Frontwand aufweist. Die Frontwand 210 ist bei 212 ausgeschnitten, und der Ausschnitt ist in den flächigen Teil des Halters 214 hinein bei 216 verlängert. Am Innenende des letzteren ist ein im Profil L-förmiger Einsatz 218 angelenkt, der komplementär in die Ausschnitte paßt. Der angelenkte Schenkel trägt auf seiner dem Halter abgewandten Seite einen Haken 220, der - wenn der Einsatz hochgeklappt ist und der Halter in das Gehäuse 224 eingeschoben ist - sich in einer entsprechenden Ausnehmung im Boden 226 des Gehäuses verankert. Damit wird der Halter gegen die Vorspannung der Federanordnung (nicht gezeigt) verriegelt. Durch Anheben des als Taste ausgebildeten anderen Schenkels 228 läßt sich der Halter entriegeln. Wie man erkennt, ruht die Disc 230 mit ihrem Außenrand auf einer eingetieften Felge 232. In der in Fig. 8 gezeichneten Position des Halters kann der Benutzer durch den freigelegten Bereich von Frontwand und Halter greifen und die Disc auf Ober- und Unterseite erfassen, anheben und über die Frontwand hinwegziehen. Beim Einlegen wird umgekehrt verfahren.

Diese Bauweise ist besonders für Kraftfahrzeuge praktisch, weil die einzelnen Halter nur einen geringen Ausschubweg zurückzulegen brauchen.

Der Disc-Behälter nach Fig. 9 umfaßt ein Gehäuse 310, in dem parallel übereinander mehrere - hier fünf - Halter 312 für je eine Disc gleitbeweglich aufgenommen sind. Jedem Halter ist im Innern des Behälters eine Federanordnung zugeordnet, die den Halter in eine Entnahmeposition vorspannt; in Fig. 9 ist der dritte Halter in dieser ausgefahrenen Entnahmeposition gezeichnet. Der Ausschubhub wird durch Anschläge festgelegt. In der Einschubposition sind die Halter im Gehäuse gegen die Vorspannung der Federanordnung verriegelt, und diese Verriegelung ist manuell auslösbar. In der Ausführungsform nach Fig. 9 ist ein Verriegelungssystem vorgesehen, bei dem der Halter sich beim Einschub aus der Entnahmeposition verriegelt und die Verriegelung durch erneuten Druck auf den eingeschobenen Halter wieder entriegelt; hierfür geeignete Konstruktionen sind in Fig. 1 und 3 offenbart, auf die bezuggenommen wird. - Um das Entriegeln der ziemlich schmalen Halter für den Benutzer bequemer zu machen, ist an dem Halter rechts oder links alternierend bei aufeinanderfolgenden Haltern, eine vorstehende Taste 314 angeformt.

Jeder Halter umfaßt eine Platte 316, auf der die Disc 318 ablegbar ist, und an ihn ist eine Klappe 320 angelenkt, welche von einer Blattfeder 322 von der Platte 316 abgespreizt gehalten wird, wenn der Halter in der Entnahmeposition ist. Beim Einschub des Halters läuft die Klappe auf die Frontkante des darüber befindlichen Halters oder - im Falle des obersten Halters - des Gehäuses 310 auf und wird dadurch nach unten gedrückt, womit der von der Platte 316 einerseits, der Klappe 320 andererseits begrenzte Schlitz geschlossen wird. Die freie Kante der Klappe 320 ist nach ungen abgewinkelt, und die so gebildete Leiste 323 verschließt das Discaufnahmefach im eingeschobenen Zustand des Halters. Die Disc ist also dann von dem Halter taschenartig allseits umschlossen.

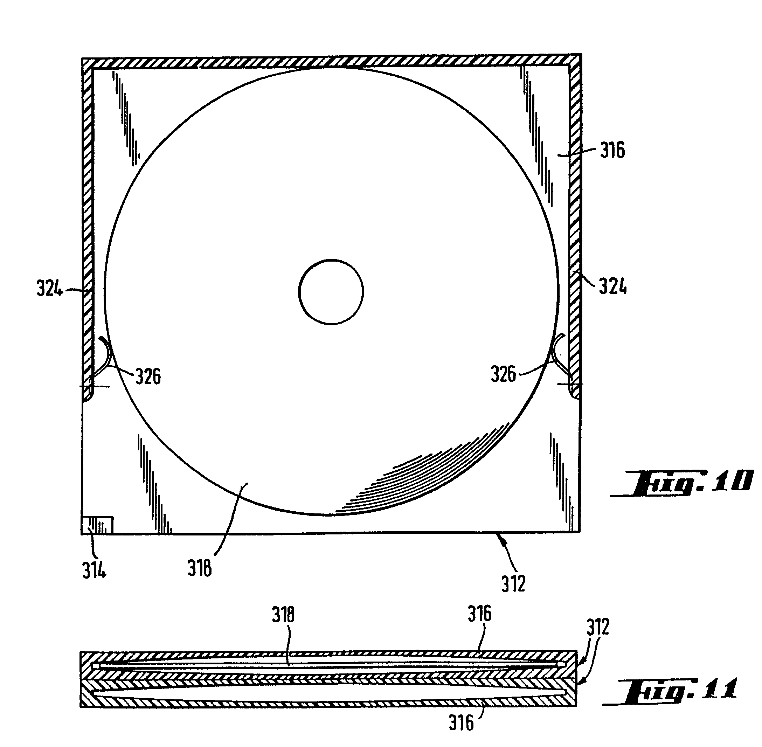

Fig. 10 zeigt den inneren Aufbau eines Halters, also bei entfernter Deckwandung der Platte 316. An der Innenseite der Vertikalwandungen 324 sind zwei Blattfedern 326 so positioniert und vorgespannt, daß sie beim Einschieben der Disc 318 zunächst ausgelenkt werden, dann aber wieder zurückfedern können und dabei eine einwärts gerichtete Kraft auf die Disc ausüben, die den Einlegevorgang unterstützt. Wenn beim Entriegeln der Halter ausgestoßen wird, verhindern die Federn 326 ein Herauskatapultieren der Disc. Es sei angemerkt, daß dieses Prinzip auch bei den weiter unten erläuterten Ausführungsformen angewandt werden kann, dort aber nicht noch einmal gezeichnet ist.

Auch das in Fig. 11 dargestellte Profil der einzelnen Halter ist bei allen Ausführungsformen anwendbar. Die Boden- und Deckwand der die Disc aufnehmenden Platte sind konkav gewölbt, so daß die Disc immer nur mit ihrer Kante, niemals aber mit ihrem Aufzeichnungsbereich Kontakt mit dem Halter haben kann, auch nicht beim Einlegen oder Entnehmen.

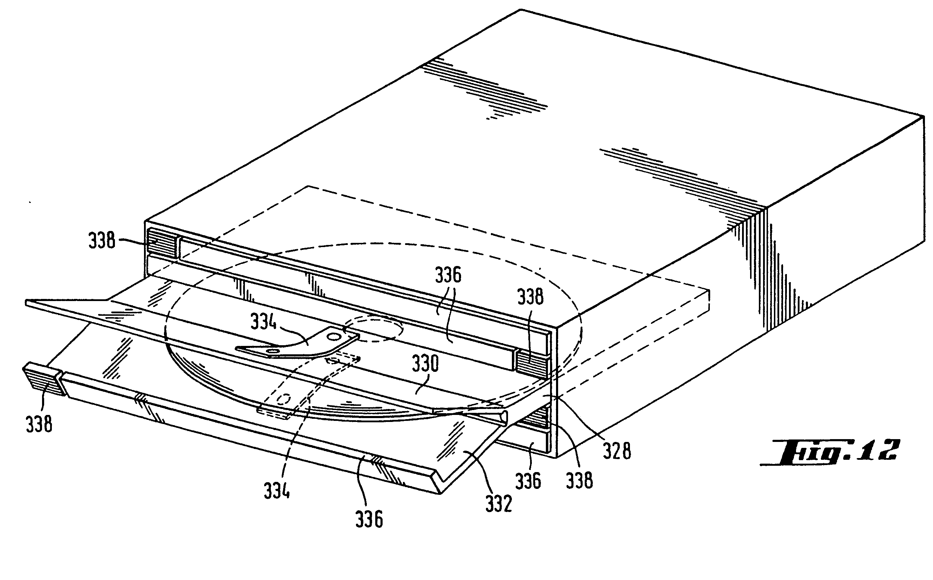

Bei der Variante nach Fig. 12 sind an die Deckwand wie auch an die Bodenwand der den Halter bildenden Platte 328 je eine Klappe 330 bzw. 332 angelenkt, jeweils durch Vorspannfedern 334 aufgespreizt gehalten, wenn der Halter in der Entnahmeposition ist. Die Verschlußleiste 336 bildet hier eine Verlängerung der Entriegelungstaste 338.

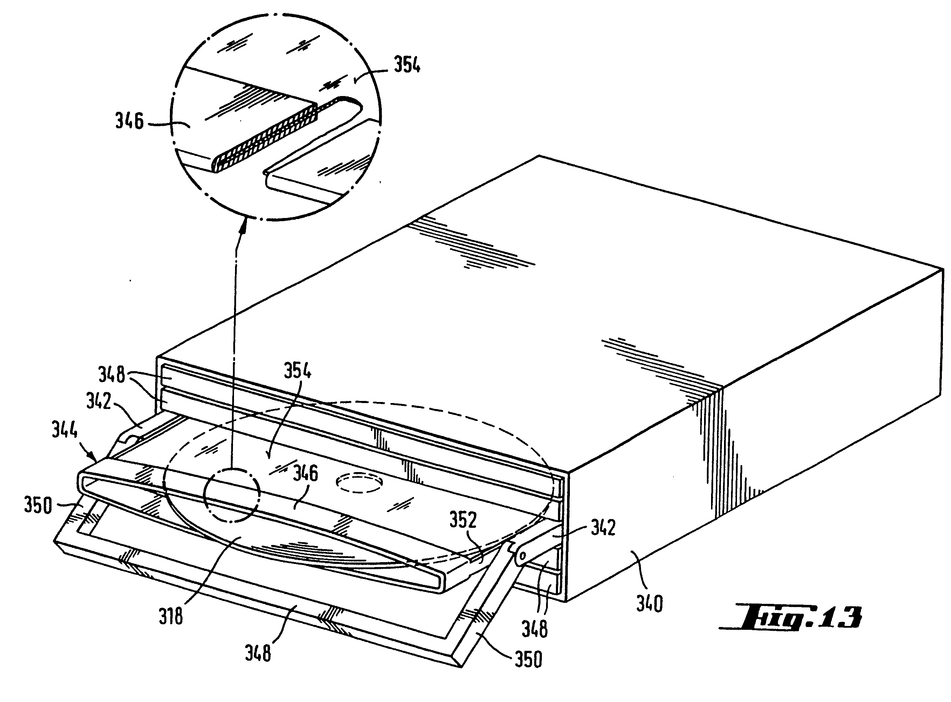

Bei der Ausführungsform nach Fig. 13 sind im Gehäuse 340 Bügel 342 gleitbeweglich geführt, mittels Federanordnung in Entnahmeposition vorgespannt und mittels manuell auslösbarer Verriegelung im Gehäuse gehalten. Jeder Bügel trägt einen Rahmen 344 mit einer frontseitigen Brücke 346, die in der Entnahmeposition oval auffedert, wie für den dritten Halter gezeichnet. Der Verschlußsteg 348 ist mit Wangen 350 an den Bügel 342 angelenkt und abklappbar, wie dargestellt, so daß die Disc 318 in Fluchtlinie mit der aufgespreizten Brücke 346 entnehmbar und einlegbar ist. Der gesamte Rahmen kann aus elastischem Kunststoff bestehen, oder aber die Brücke 346 und mit ihr verbundene seitliche Laschen 352 sind aus Metallblech, und eine Tasche 354 aus Kunststoffolie ist in die Brücke geklemmt, wie dargestellt.

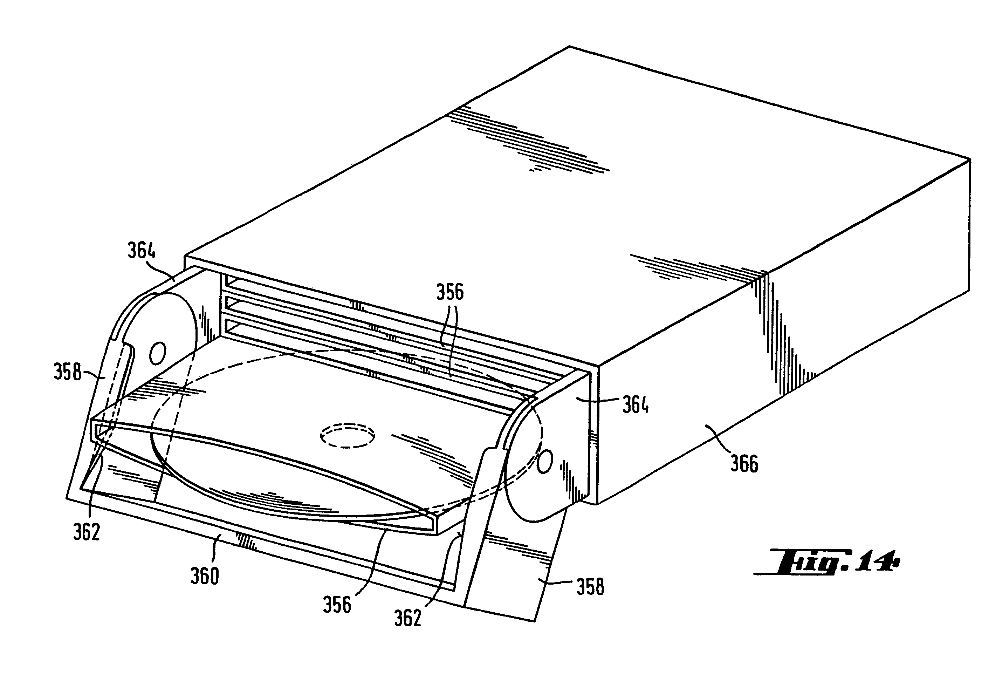

Bei der Variante nach Fig. 14 besteht der Rahmen 356 aus elastischem Kunststoff, der jedoch nicht, wie in Fig. 13, in Öffnungsposition des Disceinlegeschlitzes vorgespannt ist, sondern in die Schließposition. Während demgemäß bei Fig. 13 die Brücke durch das Einschieben des Halters mittels des Verschlußsteges 348 geschlossen wird, erfolgt bei Fig. 14 ein Aufspreizen des Schlitzes durch seitlichen Druck auf den Rahmen 356. Hierfür weisen die Anlenkwangen 358 des Verschlußsteges 360 keilförmige Verdickungen 362 auf, die beim Abklappen des Steges 360 den Raum zwischen den Wangen verengt. Da hierbei ein erheblicher Gegendruck nach außen wirkt, ist für alle Halter nur ein gemeinsamer Bügel 364 mit Steg 360 vorgesehen; ein Wählsystem (nicht dargestellt) sorgt dafür, daß immer nur einer der z. B. fünf Halter aus dem Gehäuse 366 ausgeschoben wird.

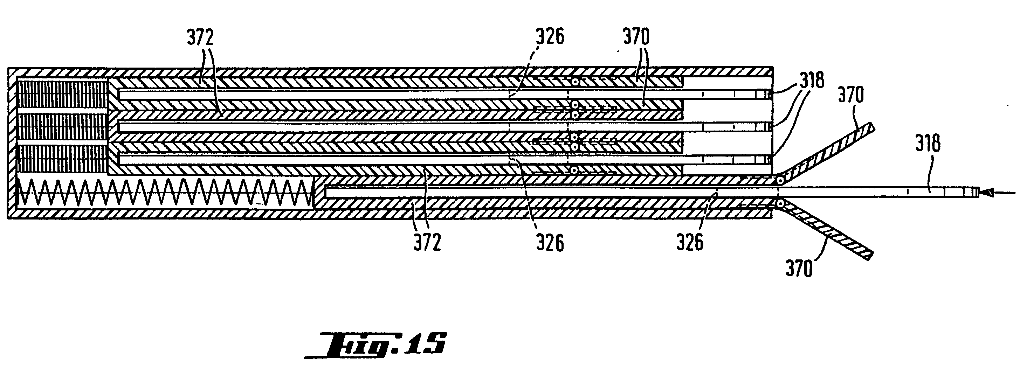

Die Ausführungsform nach Fig. 15 entspricht im Prinzip der nach Fig. 12, jedoch mit dem Unterschied, daß die Tiefe des Halters plus die Tiefe der Klappen 370 kleiner ist als der Durchmesser der Disc. Das frontseitige Segment der Disc 318 bleibt also frei, und der Benutzer schiebt den Halter 372 durch Fingerdruck auf die freie Kante der Disc ein. Wegen der Federn 326 kann die Disc trotz Fehlens von Verschlußstegen nicht herausfallen.

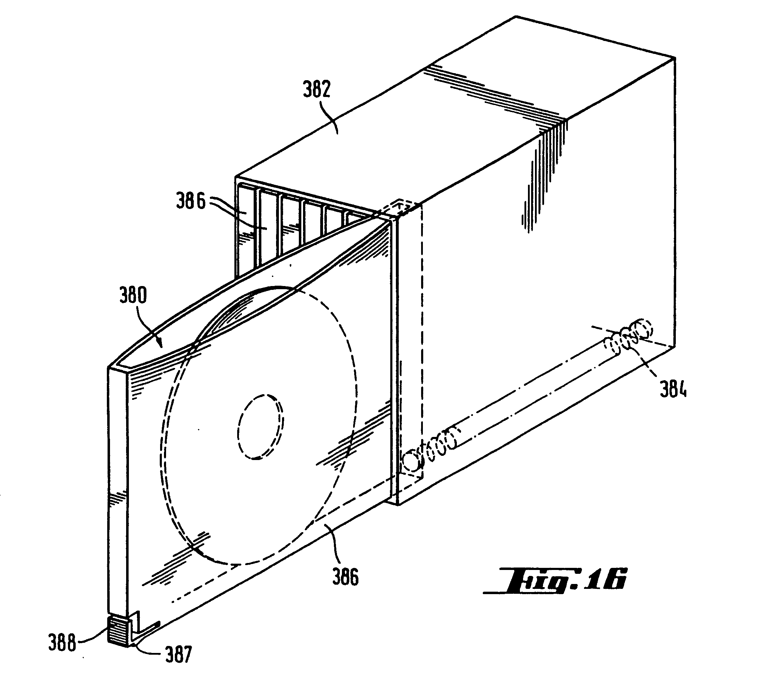

In der Ausführungsform nach Fig. 16 entspricht das Prinzip, gemäß dem der Disceinlegeschlitz geöffnet und geschlossen wird, dem der Fig. 14. Der Schlitz 380 befindet sich aber nicht an der Frontseite des Gehäuses 382, sondern erstreckt sich senkrecht dazu, so daß der Behälter besonders geeignet ist für die "stehende" Aufbewahrung der Disc, wie dargestellt. In der Zeichnung ist die Ausschubfeder 384 angedeutet, ebenso ein an den Halter 386 angeformter Riegel 387, der mittels Taste 388 manuell entriegelbar ist.

**Patentansprüche**

1. Behälter zur Aufbewahrung plattenförmiger Aufzeichnungsträger, insbesondere Compactdiscs (318), mit einem an einer Frontseite offenen Gehäuse (310) und mit mindestens einem relativ zu dem Gehäuse mittels einer Auswerffederanordnung (20) um eine begrenzte Strecke verlagerbaren Plattenhalter (96, 106, 312), der mittels einer Verriegelungsanordnung (314) gegen die Vorspannung der Auswerffederanordnung im Gehäuse arretierbar und manuell entarretierbar ist und einen im Gehäuse geführten Abstützteil (316) zur Aufnahme eines plattenförmigen Aufzeichnungsträgers umfaßt, vorzugsweise mit einem über die Gehäuseöffnung hinausbewegbaren Führungsabschnitt für das Einführen eines Aufzeichnungsträgers, dadurch gekennzeichnet, daß das Abstützteil (316) des Halters eine Bodenplatte mit einem den Aufzeichnungsträger nahe seinem Umfang abstützenden Rand aufweist, von dem ausgehend die Bodenplatte eingetieft ist, und daß Rückhalteorgane (326) vorgesehen sind, die an einem zu entnehmenden Aufzeichnungsträger angreifen, ihn jedoch bei Zug an dem Aufzeichnungsträger freigeben.

2. Behälter zur Aufbewahrung plattenförmiger Aufzeichnungsträger, insbesondere Compactdiscs (318), mit einem an einer Frontseite offenen Gehäuse (310) und mit mindestens einem relativ zu dem Gehäuse mittels einer Auswerffederanordnung (20) um eine begrenzte Strecke verlagerbaren Plattenhalter (96, 106, 312), der mittels einer Verriegelungsanordnung (314) gegen die Vorspannung der Auswerffederanordnung im Gehäuse arretierbar und manuell entarretierbar ist und einen im Gehäuse geführten Abstützteil (316) zur Aufnahme eines plattenförmigen Aufzeichnungsträgers umfaßt, vorzugsweise mit einem über die Gehäuseöffnung hinausbewegbaren Führungsabschnitt für das Einführen eines Aufzeichnungsträgers, dadurch gekennzeichnet, daß Positioniermittel vorgesehen sind, die einen aufzubewahrenden Aufzeichnungsträger beim Einlegen auf das Abstützteil auf diesem positionieren und mindestens ein federvorgespanntes, an einer Aufzeichnungsträgerkante angreifendes Rückhalteorgan (326) umfassen, das den Aufzeichnungsträger bremst.

3. Behälter nach Anspruch 1 oder 2, gekennzeichnet durch einen starr mit dem Abstützteil verbundenen Führungsabschnitt.

4. Behälter nach Anspruch 1 oder 2, gekennzeichnet durch einen beweglich mit dem Abstützteil verbundenen Führungsabschnitt.

5. Behälter nach Anspruch 4, dadurch gekennzeichnet, daß der Führungsabschnitt gelenkig mit dem Abstützteil verbunden ist.

6. Behälter nach einem der vorangehenden Ansprüche, gekennzeichnet durch eine Frontwandung, die in der Aufbewahrungsposition des Plattenhalters die offene Gehäusefront abdeckt.

7. Behälter nach Anspruch 6, dadurch gekennzeichnet, daß eine Mehrzahl von Plattenhaltern in dem Gehäuse untergebracht und allen eine gemeinsame Frontwandung zugeordnet ist.

8. Behälter nach Anspruch 6, dadurch gekennzeichnet, daß jeder einer Mehrzahl von in einem gemeinsamen Gehäuse untergebrachten Plattenhaltern eine Frontwandung aufweist und die Frontwandungen gemeinsam die offene Gehäusefrontseite abdecken.

9. Behälter nach Anspruch 8, dadurch gekennzeichnet, daß die Frontwandung mit den Plattenhaltern beweglich verbunden ist.

10. Behälter nach Anspruch 9, dadurch gekennzeichnet, daß die Frontwandung in der ausgeschobenen Position des Plattenhalters aus dem Entnahme- oder Einschubweg des Aufzeichnungsträgers weg verlagert ist.

11. Behälter nach Anspruch 10, dadurch gekennzeichnet, daß die Frontwandung gelenkig mit dem Abstützteil verbunden ist.

12. Behälter nach Anspruch 10 oder 11, dadurch gekennzeichnet, daß die Frontwandung in ihre verlagerte Position zwangsgeführt ist.

13. Behälter nach einem der Ansprüche 10 oder 11, dadurch gekennzeichnet, daß die Frontwandung in eine ihrer Endlagen federvorgespannt ist.

14. Behälter nach einem der Ansprüche 10 bis 13, dadurch gekennzeichnet, daß Anschläge für die Festlegung mindestens einer Endlage der Frontwandung vorgesehen sind.

15. Behälter nach einem der Ansprüche 8 bis 14 und Anspruch 4, dadurch gekennzeichnet, daß die Frontwandung und der Führungsabschnitt ein gemeinsames Bauteil bilden.

16. Behälter nach Anspruch 15, dadurch gekennzeichnet, daß Führungsabschnitt und Frontwandung ein einstückiges Bauteil bilden.

17. Behälter nach einem der Ansprüche 3 - 5 oder 15 oder 16, dadurch gekennzeichnet, daß der Führungsabschnitt plattenförmig ist.

18. Behälter nach Anspruch 17, dadurch gekennzeichnet, daß der Führungsabschnitt im wesentlichen gleiche Breite wie der Abstützteil aufweist.

19. Behälter nach Anspruch 1 und 18, dadurch gekennzeichnet, daß sich die Eintiefung in den Führungsabschnitt fortsetzt.

20. Behälter nach Anspruch 5, gekennzeichnet durch zwei sich trichterartig öffnende Führungsabschnitte an jedem Abstützteil.

21. Behälter nach Anspruch 1 oder 2, dadurch gekennzeichnet, daß mit dem Abstützteil ein Führungsabschnitt gelenkig verbunden ist und dieser mit einer Frontwandung versehen ist, die bei eingeschobenem Plattenhalter die offene Gehäusefrontseite abdeckt, und daß die Gelenkachse von der Frontwandung so weit beabstandet ist, daß in der ausgeschobenen Position des Plattenhalters ein frontseitiges Segment des Aufzeichnungsträgers beidseitig freiliegend erfaßbar ist.

22. Behälter nach einem der vorangehenden Ansprüche, dadurch gekennzeichnet, daß jeder Plattenhalter nahe seinem gehäuseinneren Ende hochstehende Zinken aufweist, die in Schlitze in der zugekehrten Unterseite eines darüberbefindlichen Plattenhalters oder einer Gehäusedeckwand greifen.

23. Behälter nach einem der vorangehenden Ansprüche, dadurch gekennzeichnet, daß jedem Plattenhalter eine eigene Ausschubfeder zugeordnet ist, die sich einerseits an einer Gehäuserückwand, andererseits an einer dieser zugekehrten Endkante des Plattenhalters abstützt.

24. Behälter nach einem der Ansprüche 6 bis 16, dadurch gekennzeichnet, daß die Frontwandungen übereinander angeordneter Plattenhalter im wesentlichen aneinandergrenzen.

25. Behälter nach Anspruch 3 oder einem auf diesen rückbezogenen Anspruch, dadurch gekennzeichnet, daß der Abstützteil eine das Erfassen eines auf ihm liegenden Aufzeichnungsträgers ermöglichende Ausnehmung aufweist.

26. Behälter nach einem der vorangehenden Ansprüche, dadurch gekennzeichnet, daß jeder Plattenhalter beidseits in Führungen gleitbeweglich aufgenommen ist, die an Gehäuseseitenwänden vorgesehen sind.

27. Behälter nach Anspruch 26, dadurch gekennzeichnet, daß teleskopartige Führungsschienen vorgesehen sind.

28. Behälter nach Anspruch 1 oder einem auf diesen rückbezogenen Anspruch, dadurch gekennzeichnet, daß jeder Abstützteil auch auf seiner Unterseite eingetieft ist.

29. Behälter nach einem der vorangehenden Ansprüche, dadurch gekennzeichnet, daß die Verriegelungsanordnung beim Einschieben eines Plattenhalters selbsttätig arretierend ausgebildet ist.

30. Behälter nach einem der vorangehenden Ansprüche, dadurch gekennzeichnet, daß jedem Plattenhalter eine über die Gehäusefront vorstehende Entriegelungstaste zugeordnet ist.

31. Behälter nach Anspruch 8 und Anspruch 30, dadurch gekennzeichnet, daß die Entriegelungstasten an den Frontwänden angeordnet sind.

32. Behälter nach Anspruch 31, dadurch gekennzeichnet, daß die Tasten sich nur über einen Teilbereich der Breite der Frontwandungen erstrecken und die Tasten benachbarter Plattenhalter zueinander seitlich versetzt sind.

33. Behälter nach Anspruch 6, dadurch gekennzeichnet, daß die Frontwandung ein Beschriftungsfeld aufweist.

34. Behälter nach Anspruch 33, gekennzeichnet durch eine transparente Abdeckung für das Beschriftungsfeld.

35. Behälter nach einem der vorangehenden Ansprüche, dadurch gekennzeichnet, daß jeder Plattenhalter einen Einführungsschlitz für einen Aufzeichnungsträger aufweist, der bei ausgeschobenem Plattenhalter offen und bei eingeschobenem Plattenhalter geschlossen ist.

36. Behälter nach Anspruch 25, dadurch gekennzeichnet, daß die Ausnehmung durch einen verlagerbaren, eine Entriegelungstaste bildenden Einsatz abgedeckt ist.

37. Behälter nach einem der Ansprüche 29 bis 32, dadurch gekennzeichnet, daß jede Taste mit einem Riegel in Wirkverbindung steht, um diesen aus einer Gehäuseausnehmung zu heben.

38. Behälter nach Anspruch 37, dadurch gekennzeichnet, daß die Gehäuseausnehmung in einer Gehäuseseitenwandung ausgebildet ist.

39. Behälter nach einem der Ansprüche 29 bis 32, dadurch gekennzeichnet, daß jede Taste einstückig mit dem zugehörigen Plattenhalter ausgebildet ist.

40. Behälter nach Anspruch 1 oder einem darauf rückbezogenen Anspruch, dadurch gekennzeichnet, daß das Gehäuse und jeder Plattenhalter Führungsmittel außerhalb der Eintiefung aufweisen.

41. Behälter nach Anspruch 40, dadurch gekennzeichnet, daß die Führungsmittel ineinandergreifende Nuten und Rippen umfassen.

42. Behälter nach Anspruch 5 oder 11 und 13, dadurch gekennzeichnet, daß eine Vorspannfeder im Bereich der gelenkigen Verbindung vorgesehen ist.

43. Behälter nach einem der vorangehenden Ansprüche, dadurch gekennzeichnet, daß die Rückhalteorgane mindestens einen Federarm umfassen.

44. Behälter nach Anspruch 43, gekennzeichnet durch ein Paar symmetrisch angeordneter Federarme.

45. Behälter nach Anspruch 43 oder 44, dadurch gekennzeichnet, daß an jedem Abstützteil mindestens ein Federarm befestigt ist.

46. Behälter nach einem der Ansprüche 43 bis 45, dadurch gekennzeichnet, daß das freie Federende abgerundet ist.

## Revendications

1. Dispositif pour le rangement de supports d'enregistrement en forme de disques, notamment de disques compacts (318), comportant un boîtier (310) ouvert sur un côté avant et au moins un porte-disque (96, 106, 312), qui peut être déplacé sur une distance limitée par rapport au boîtier à l'aide d'un dispositif formant ressort d'éjection (20), peut être bloqué dans le boîtier au moyen d'un dispositif de verrouillage (314) à l'encontre de la précontrainte du dispositif formant ressort d'éjection et peut être débloqué manuellement et comporte un élément de soutien (316) guidé dans le boîtier servant à recevoir un support d'enregistrement en forme de disque, et comportant de préférence une section de guidage, qui peut être ressortie à travers l'ouverture du boîtier et est utilisée pour l'introduction d'un support d'enregistrement, caractérisé en ce que l'élément de soutien (316) du porte-disque comprend une plaque de base comportant un bord soutenant à proximité de son pourtour le support d'enregistrement et par rapport auquel la plaque de base est en renfoncement, et qu'il est prévu des organes de rappel (326), qui s'accrochent à un support d'enregistrement devant être retiré, mais le libèrent lorsqu'une traction est appliquée au support d'enregistrement.

2. Dispositif pour le rangement de supports d'enregistrement en forme de disques, notamment de disques compacts (318), comportant un boîtier (310) ouvert sur un côté avant et au moins un porte-disque (96, 106, 312), qui peut être déplacé sur une distance limitée par rapport au boîtier à l'aide d'un dispositif formant ressort d'éjection (20), peut être bloqué dans le boîtier au moyen d'un dispositif de verrouillage (314) à l'encontre de la précontrainte du dispositif formant ressort d'éjection et peut être débloqué manuellement et comporte un élément de soutien (316) guidé dans le boîtier servant à recevoir un support d'enregistrement en forme de disque, et comportant de préférence une section de guidage, qui peut être ressortie à travers l'ouverture du boîtier et est utilisée pour l'introduction d'un support d'enregistrement, caractérisé en ce qu'il est prévu des moyens de positionnement, qui positionnent un support d'enregistrement, devant être rangé, sur l'élément de soutien, lors de l'insertion du support d'enregistrement sur cet élément de soutien et comprennent au moins un organe de rappel (326), qui est précontraint par un ressort, s'accroche à un bord du support d'enregistrement et freine ce support d'enregistrement.

3. Dispositif selon la revendication 1 ou 2, caractérisé par une section de guidage reliée rigidement à l'élément de soutien.

4. Dispositif selon la revendication 1 ou 2, caractérisé par une section de guidage reliée, de manière à être mobile, à l'élément de soutien.

5. Dispositif selon la revendication 4, caractérisé en ce que la section de guidage est reliée par articulation à l'élément de soutien.

6. Dispositif selon l'une des revendications précédentes, caractérisé par une paroi avant qui ferme l'avant ouvert du boîtier, lorsque le porte-disque est dans la position de rangement.

7. Dispositif selon la revendication 6, caractérisé en ce qu'une pluralité de porte-disques sont logés dans le boîtier et qu'une paroi avant commune est associée à l'ensemble de ces porte-disques.

8. Dispositif selon la revendication 6, caractérisé en ce que chaque porte-disque d'une multiplicité de porte-disques logés dans un boîtier commun possède une paroi avant et que les parois avant ferment en commun la face avant ouverte du boîtier.

9. Dispositif selon la revendication 8, caractérisé en ce que la paroi avant est reliée, de manière à être mobile, aux porte-disques.

10. Dispositif selon la revendication 9, caractérisé en ce que lorsque le porte-disque est dans la position ressortie, la paroi avant est écartée du trajet de prélèvement ou d'insertion du support d'enregistrement.

11. Dispositif selon la revendication 10, caractérisé en ce que la paroi avant est reliée par articulation à l'élément de soutien.

12. Dispositif selon la revendication 10 ou 11, caractérisé en ce que la paroi avant est guidée selon un guidage forcé dans sa position décalée.

13. Dispositif selon la revendication 10 ou 11, caractérisé en ce que la paroi avant est précontrainte élastiquement dans l'une de ses positions d'extrémité.

14. Dispositif selon l'une des revendications 10 à 13, caractérisé en ce qu'il est prévu des butées pour la fixation d'au moins une position d'extrémité de la paroi avant.

15. Dispositif selon l'une des revendications 8 à 14 et selon la revendication 4, caractérisé en ce que la paroi avant et la section de guidage forment un composant monobloc.

16. Dispositif selon la revendication 15, caractérisé en ce que la section de guidage et la paroi avant forment un composant monobloc.

17. Dispositif selon l'une des revendications 3 - 5 ou 15 ou 16, caractérisé en ce que la section de guidage possède la forme d'un disque.

18. Dispositif selon la revendication 17, caractérisé en ce que la section de guidage possède sensiblement la même largeur que l'élément de soutien.

19. Dispositif selon les revendications 1 et 18, caractérisé en ce que le renfoncement se prolonge dans la section de guidage.

20. Dispositif selon la revendication 5, caractérisé par deux sections de guidage s'ouvrant en forme d'entonnoir, au niveau de chaque élément de soutien.

21. Dispositif selon la revendication 1 ou 2, caractérisé en ce qu'une section de guidage est reliée par articulation à l'élément de soutien et que cette section de guidage comporte une parmi avant qui recouvre la face avant ouverte du boîtier, lorsque le porte-disque est inséré, et en ce que l'axe d'articulation se situe à une distance telle de la paroi avant que, lorsque le porte-disque est dans la position ressortie, un segment frontal du support d'enregistrement peut être saisi librement sur ses deux faces.

22. Dispositif selon l'une des revendications précédentes, caractérisé en ce que chaque porte-disque possède, à proximité de son extrémité située dans le boîtier, des dents saillantes, qui s'engagent dans des fentes ménagées dans la face inférieure, tournée vers les dents, d'un porte-disque situé au-dessus des dents, ou d'une paroi de fermeture du boîtier.

23. Dispositif selon l'une des revendications précédentes, caractérisé en ce qu'à chaque porte-disque est associé un ressort particulier d'éjection, qui prend appui d'une part contre une paroi arrière du boîtier et d'autre part contre un bord d'extrémité, tourné vers le ressort, du porte-disque.

24. Dispositif selon l'une des revendications 6 à 16, caractérisé en ce que les parois avant de porte-disques superposés sont sensiblement contiguës.

25. Dispositif selon la revendication 3 ou une revendication rattachée à cette dernière, caractérisé en ce que l'élément de soutien comporte un évidement permettant de saisir un support d'enregistrement reposant sur l'élément de soutien.

26. Dispositif selon l'une des revendications précédentes, caractérisé en ce que chaque porte-disque est logé de manière à être déplaçable par glissement, des deux côtés, dans des guides prévus sur des parois latérales du boîtier.

27. Dispositif selon la revendication 26, caractérisé en ce qu'il est prévu des rails de guidage télescopiques.

28. Dispositif selon la revendication 1 ou une revendication rattachée à cette dernière, caractérisé en ce que chaque élément de soutien est également en renfoncement au niveau de sa face inférieure.

29. Dispositif selon l'une des revendications précédentes, caractérisé en ce que le dispositif de verrouillage est agencé de manière à se bloquer automatiquement lors de l'insertion d'un porte-disque.

30. Dispositif selon l'une des revendications précédentes, caractérisé en ce qu'une touche de déverrouillage, qui fait saillie sur l'avant du boîtier, est associée à chaque porte-disque.

31. Dispositif selon la revendication 8 et la revendication 30, caractérisé en ce que les touches de déverrouillage sont disposées sur les parois avant.

32. Dispositif selon la revendication 31, caractérisé en ce que les touches s'étendent uniquement sur une partie de l'étendue en largeur des parois avant et que les touches des porte-disques voisins sont décalées latéralement les unes par rapport aux autres.

33. Dispositif selon la revendication 6, caractérisé en ce que la paroi avant possède une zone apte à recevoir une inscription.

34. Dispositif selon la revendication 33, caractérisé par un capot transparent pour la zone apte à recevoir une inscription.

35. Dispositif selon l'une des revendications précédentes, caractérisé en ce que chaque porte-disque comporte une fente d'insertion pour un support d'enregistrement, qui est ouverte lorsque le porte-disque est ressorti et est fermée lorsque le porte-disque est en position rentrée.

36. Dispositif selon la revendication 25, caractérisé en ce que l'évidement est fermé par un insert déplaçable constituant une touche de déverrouillage.

37. Dispositif selon l'une des revendications 29 à 32, caractérisé en ce que chaque touche est reliée selon une liaison active à un verrou de manière à soulever ce dernier hors d'un évidement du boîtier.

38. Dispositif selon la revendication 37, caractérisé en ce que l'évidement du boîtier est ménagé dans une paroi latérale du boîtier.

39. Dispositif selon l'une des revendications 29 à 32, caractérisé en ce que chaque touche est réalisée d'un seul tenant avec le porte-disque associé.

40. Dispositif selon la revendication 1 ou une revendication rattachée à cette dernière, caractérisé en ce que le boîtier et chaque porte-disque comporte des moyens de guidage situés à l'extérieur du renfoncement.

41. Dispositif selon la revendication 40, caractérisé en ce que les moyens de guidage comprennent des rainures et des nervures réciproquement imbriquées.

42. Dispositif selon la revendication 5 ou 11 et 13, caractérisé en ce qu'un ressort de précontrainte est prévu dans la zone de la liaison articulée.

43. Dispositif selon l'une des revendications précédentes, caractérisé en ce que les organes de retenue comprennent au moins une branche de ressort.

44. Dispositif selon la revendication 43, caractérisé par un couple de branches de ressort disposées symétriquement.

45. Dispositif selon la revendication 43 ou 44, caractérisé en ce qu'au moins une branche de ressort est fixée à chaque élément de soutien.

46. Dispositif selon l'une des revendications 43 à 45, caractérisé en ce que l'extrémité libre du ressort est arrondie.

## Claims

1. A container for storing disc-shaped recording media, especially compact discs (318), having a housing (310) open at a front side, and having at least one disc-holder (96, 106, 312) displaceable by a limited distance relative to the housing by means of an ejection spring arrangement (20), which disc-holder is lockable in the housing by means of a locking arrangement (314) against the bias of the ejection spring arrangement and is manually releasable and includes a supporting part for receiving a disc-shaped recording medium (316) which supporting part is guided in the housing, preferably with a guide portion movable beyond the housing opening for the insertion of a recording medium, characterized in that the supporting part (316) of the holder has a bottom plate with an edge supporting the recording medium close to its periphery, starting from which edge the bottom plate is dished, and in that restraining elements (326) are provided which engage a recording medium to be removed but release it when the recording medium is pulled.

2. A container for storing disc-shaped recording media, especially compact discs (318), having a housing (310) open at a front side, and having at least one disc-holder (96, 106, 312) displaceable by a limited distance relative to the housing by means of an ejection spring arrangement (20), which disc-holder is lockable in the housing by means of a locking arrangement (314) against the bias of the ejection spring arrangement and is manually releasable and includes a supporting part (316) for receiving a disc-shaped recording medium, which supporting part is guided in the housing, preferably with a guide portion movable beyond the housing opening for the insertion of a recording medium, characterized in that positioning means are provided which position a recording medium to be stored on the supporting part as the former is placed thereon, and include at least one spring-biased restraining element (326) engaging a recording medium edge, which restraining element holds back the recording medium.

3. A container according to claim 1 or 2, characterized by a guide portion rigidly connected to the supporting part.

4. A container according to claim 1 or 2, characterized by a guide portion movably joined to the supporting part.

5. A container according to claim 4, characterized in that the guide portion is hinged to the supporting part.

6. A container according to one of the preceding claims, characterized by a front wall which covers the open housing front in the storage position of the disc-holder.

7. A container according to claim 6, characterized in that a plurality of disc-holders are accommodated in the housing and a common front wall is assigned to them all.

8. A container according to claim 6, characterized in that each of a plurality of disc-holders accommodated in a common housing has a front wall and the front walls together cover the open front side of the housing.

9. A container according to claim 8, characterized in that the front wall is movably joined to the disc-holders.

10. A container according to claim 9, characterized in that, in the ejected position of the disc-holder, the front wall is moved out of the removal or insertion path of the recording medium.

11. A container according to claim 10, characterized in that the front wall is hinged to the supporting part.

12. A container according to claim 10 or 11, characterized in that the front wall is constrained to move into its displaced position.

13. A container according to one of claims 10 or 11, characterized in that the front wall is spring-biassed into one of its end positions.

14. A container according to one of claims 10 to 13, characterized in that stops are provided for determining at least one end position of the front wall.

15. A container according to one of claims 8 to 14 and claim 4, characterized in that the front wall and the guide portion form a common component.

16. A container according to claim 15, characterized in that the guide portion and the front wall form a one-piece component.

17. A container according to one of claims 3 to 5 or 15 or 16, characterized in that the guide portion is plate-shaped.

18. A container according to claim 17, characterized in that the guide portion is substantially the same width as the supporting part.

19. A container according to claim 1 and 18, characterized in that the dished configuration continues into the guide portion.

20. A container according to claim 5, characterized by two guide portions opening funnel-like on each supporting part.

21. A container according to claim 1 or 2, characterized in that a guide portion is hinged to the supporting part and is provided with a front wall that covers the open housing front side when the disc-holder is inserted, and the hinge axis is spaced from the front wall to such an extent that in the ejected position of the disc-holder a front segment of the recording medium is grippable on both sides.

22. A container according to one of the preceding claims characterized in that, close to its end inside the housing, each disc-holder has upright projections which engage in slots in the underside facing it of a disc-holder located thereover or a top wall of the housing.

23. A container according to one of the preceding claims, characterized in that each disc-holder is provided with its own ejection spring which is supported at one end on a rear wall of the housing and at the other end on an end edge of the disc-holder facing this end.

24. A container according to one of claims 6 to 16, characterized in that the front walls of disc-holders arranged one above the other lie substantially adjacent one another.

25. A container according to claim 3 or a claim referring back to this claim, characterized in that the supporting part has a recess allowing a recording medium lying on the supporting part to be grasped.

26. A container according to one of the preceding claims, characterized in that each disc-holder is slidably accommodated on both sides in guides that are provided on the housing side walls.

27. A container according to claim 26, characterized in that telescopic guide rails are provided.

28. A container according to claim 1 or to a claim referring back to this claim, characterized in that each supporting part is recessed also on its underside.

29. A container according to one of the preceding claims, characterized in that the locking arrangement is constructed to lock automatically as a disc-holder is inserted.

30. A container according to one of the preceding claims, characterized in that each disc-holder is assigned an unlocking button projecting beyond the front of the housing.

31. A container according to claim 8 and 30, characterized in that the unlocking buttons are arranged on the front walls.

32. A container according to claim 31, characterized in that the buttons extend only for a part of the width of the front walls and the buttons of adjacent disc holders are staggered laterally with respect to one another.

33. A container according to claim 6, characterized in that the front wall has an inscription space.

34. A container according to claim 33, characterized by a transparent cover for the inscription space.

35. A container according to one of the preceding claims, characterized in that each disc-holder has an insertion slot for a recording medium, which is open when the disc-holder is ejected and is closed when the disc-holder is inserted.

36. A container according to claim 25, characterized in that the recess is covered by a displaceable insert forming an unlocking button.

37. A container according to one of claims 29 to 32, characterized in that each button is in operative connection with a locking mechanism in order to lift this out of a housing recess.

38. A container according to claim 37, characterized in that the housing recess is constructed in a side wall of the housing.

39. A container according to one of claims 29 to 32, characterized in that each button is of one-piece construction with the associated disc-holder.

40. A container according to claim 1 or to a claim referring back to this claim, characterized in that the housing and each disc-holder have guide means outside the dished configuration.

41. A container according to claim 40, characterized in that the guide means comprise mutually-engaging grooves and ribs.

42. A container according to claim 5 or 11 and 13, characterized in that a biasing spring is provided in the region of the hinged joint.

43. A container according to one of the preceding claims, characterized in that the restraining elements comprise at least one spring arm.

44. A container according to claim 43, characterized by a pair of symmetrically arranged spring arms.

45. A container according to claim 43 or 44, characterized in that at least one spring arm is fastened to each supporting part.

46. A container according to one of claims 43 to 45, characterized in that the free spring end is rounded.

Fig.1

Fig.2

Fig. 3

Fig.4.

5

**Fig:5**

200

64

200

90

90

30

66

14

**Fig:6**

90

90

90

92

94

**Fig:7**

64

90

194

192

90

66

EP 0 139 161 B1

EP 0 139 161 B1

Fig. 8

Fig.4

Fig. 10

Fig. 11

Fig.12

**Fig. 13**

Fig. 14

EP 0 139 161 B1

*Fig. 15*

382

386

380

384

386

388

387

*Fig.16*